(19) Europäisches Patentamt

European Patent Office

Office européen des brevets

(11) **EP 4 106 409 B1**

(12) **EUROPEAN PATENT SPECIFICATION**

(45) Date of publication and mention
of the grant of the patent:
**15.01.2025 Bulletin 2025/03**

(21) Application number: **21179274.2**

(22) Date of filing: **14.06.2021**

(51) International Patent Classification (IPC):
*H04W 40/22* (2009.01)     *H04W 40/24* (2009.01)

(52) Cooperative Patent Classification (CPC):
**H04W 40/22; H04W 40/24; H04W 40/246**

(54) **APPARATUS, METHOD AND COMPUTER PROGRAM FOR A WIRELESS COMMUNICATION DEVICE AND FOR A VEHICULAR RELAY STATION**

VORRICHTUNG, VERFAHREN UND COMPUTERPROGRAMM FÜR EINE DRAHTLOSE KOMMUNIKATIONSVORRICHTUNG UND FÜR EINE FAHRZEUGRELAISSTATION

APPAREIL, PROCÉDÉ ET PROGRAMME INFORMATIQUE POUR UN DISPOSITIF DE COMMUNICATION SANS FIL ET POUR UNE STATION RELAIS POUR VÉHICULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.12.2022 Bulletin 2022/51**

(73) Proprietors:
• **Volkswagen Aktiengesellschaft**
**38440 Wolfsburg (DE)**
• **Seat, S.A.**
**08760 Martorell (ES)**

(72) Inventors:
• **PFADLER, Andreas**
**13357 Berlin (DE)**
• **MONTERO BAYO, Luca**
**08028 Barcelona (ES)**

(74) Representative: **2SPL Patentanwälte PartG mbB**
**Landaubogen 3**
**81373 München (DE)**

(56) References cited:
**US-A1- 2019 281 526     US-A1- 2020 280 827**

**Description**

The present invention relates to an apparatus, a method and a computer program for a wireless communication device.

The development of the 5th-generation mobile communication standard (5G) of the 3rd. Generation Partnership Project (3GPP) has brought increased attention to the automotive industry, as vehicular communications are expected to leverage the most advanced features of the new generation of wireless communications. Among the main novelties of 5G, a wider range of usable spectrum (currently licensed up to the 28 GHz band - the first-ever Millimeter wave band for mobile use), enhanced support for high mobility scenarios and new mechanisms to guarantee and predict the experienced Quality of Service (QoS), have been established as key functions to support an increasingly connected transportation ecosystem. Besides, the latest standard release (Rel. 16) has given support to Vehicle-to-Everything (V2X) communications with New Radio (NR) technology, allegedly allowing vehicles to make use of the same spectrum options, even for Vehicle-to-Vehicle (V2V) use cases.

The use of higher frequency bands in communications implies propagating in a harsher channel, where the free-space path loss scales with the frequency squared ($f^2$), and shading by obstacles and atmospheric effects (i.e., water vapor and oxygen absorption, or rain) take a nonnegligible role.

Services relying on higher frequency systems, with their inherently high channel-induced attenuation, might find is challenging to deliver satisfactory QoS in some situations where signal power attenuation is increased, lowering the received Signal-to-Noise Ratio. This has sometimes motivated externalizing antennas for diverse services (such as 802.11p V2X, tolling, GPS and other services).

Even in the case of 5G the user may face low or out of coverage situations, depending on the used sim card, i.e. coverage provided by the MNO (Mobile Network Operator), it uses.

Japanese patent application JP2005143122 (A) relates to a telecommunication system and method to ensure operations of mobile telephone on board of vehicle during border crossing. In particular, the application relates to a ferry commuting between ports located in two different borders. In said application, when a geographical boundary is crossed, a signal being amplified by a repeated is switched from a first to a second communication signal being provided by different base stations that are located on either side of the border.

US patent application US 2011/0294500 A1 relates to a power-saving method for a mobile device. In said application, two connections can be established - a more power-efficient connection between the mobile device and a communication device, and a less power-efficient connection between the mobile device and an access point. If the more power-efficient connection is available, the less power-efficient connection is cut off. For example, the more power-efficient connection may be established between the mobile device and a communication device of a vehicle, e.g., a vehicle gateway. For example, a Subscriber Identity Module (SIM) profile may be transferred from the mobile device to the communication device of the vehicle.

US patent application US 2010/0234071 A1 relates to a vehicle integrated communication system. In said applications, a cellular communication platform is integrated into a vehicle, using multiple antennas of the vehicle. For example, the cellular communication platform may provide a smart vehicle repeater, a mobile femtocell or an inverted femtocell.

US patent application US 2020/0280827 A1 relates to V2X communications using multiple radio access technologies. For example, a vehicular relay may switch between different radio access technologies based on a reliability of a currently used radio access technology.

US patent application US 2019/0281526 A1 relates to a concept for realizing mobile relays for device-to-device communications. For example, a remote wireless transmitter/receiver unit can switch between different mobile relays.

However, none of the above publications address the objective of whether or when it is beneficial for a UT to connect to a vehicular relay station.

There may be a desire for an improved concept for wireless communication of a wireless communication device in a vehicle.

Various embodiments of the present disclosure are based on the finding, that vehicular relay stations have various advantages over wireless communication devices - they usually have a greater power budget and better antennae that are placed on the outside the respective vehicle hosting the vehicular relay station, enabling an improved communication between the vehicular relay station and a base station (or base stations) being used for a wireless backhaul connection of the vehicular relay station compared to the direct connection between a wireless communication device and the base station from inside the vehicle. Additionally, vehicular relay stations often have backhaul connections to multiple base stations, via the mobile communication systems of multiple mobile network operators and might therefore be less often out of coverage of the base stations than the wireless communication device that is limited to a single mobile network operator. For example, a wireless communication device (e.g., a mobile device, such as a UT), might experience low or out of coverage. The UT might use or have access to only one mobile network operator (as it has one sim card) and might therefore not be able to obtain a required or desired Quality of Service (QoS), such as a required or desired throughput, latency or reliability. However, vehicles usually have improved wireless connectivity through a larger power budged and better antennae and/or multi-MNO connectivity, which may be used to overcome the QoS limitation.

The invention is set out in the appended set of claims.

Various aspects of the present disclosure relate to a method for a wireless communication device. The method comprises communicating in a wireless communication network via a first wireless connection with a base station. The method comprises determining, whether a desired QoS of the wireless communication device exceeds a QoS of the first wireless connection (i.e., whether the QoS of the first wireless connection is worse than the desired QoS of the wireless communication device). The method comprises establishing a second wireless connection with a vehicular relay station if the desired QoS of the wireless communication device exceeds the QoS of the first wireless connection. In case the desired QoS of the wireless communication device exceeds the QoS of the first wireless connection, it is likely that the QoS available via the vehicular relay station also exceeds the QoS of the first wireless connection, potentially making the desired QoS available to the wireless communication device.

For example, this may be the case if the vehicular relay station can use the resources of multiple wireless backhaul connections. For example, the vehicular relay station may be associated with two or more wireless base stations of two or more mobile network operators and/or two or more radio access technologies. In this case, it is likely that the QoS available via the vehicular relay station exceeds the desired QoS of the wireless communication device.

To fully leverage the multiple connections available at the vehicular relay station, link aggregation may be used via the multiple wireless backhaul connections of the vehicular relay station. The method comprises establishing a data connection via the second wireless connection and via two of the two or more mobile network operators and/or two of the two or more radio access technologies. The vehicular relay station is used as gateway for the wireless communication device. By combining multiple wireless backhaul connections, the QoS provided by the vehicular relay station can be improved, and the desired QoS of the wireless communication device may be provided to the wireless communication device.

In some cases, for charging purposes, the wireless communication device may be limited to the mobile network operator the wireless communication device is associated with, e.g., the mobile network operator operating the base station the wireless communication device is connected to. The act of establishing the second wireless connection comprises transmitting a request to the vehicular relay station. The request comprises information on a mobile network operator associated with the wireless communication device. The method comprises establishing a connection to the mobile communication system of the mobile network operator via the vehicular relay station. In this case, the connection established via the vehicular relay station may be limited to communication being performed over wireless backhaul connections being operated by the mobile network operator. However, the vehicular relay station might still be connected to multiple base stations of the mobile network operator, e.g., via different radio access technologies, thereby establishing the connection to the mobile communication system of the mobile network operator via multiple wireless backhaul connections.

In some regions, a large number of different mobile network operators operate mobile communication systems. However, the vehicular relay station might be limited to a limited number of different mobile network operators. In case the vehicular relay station is not associated with the mobile network operator of the wireless communication device, the second connection might not be established, as the wireless communication device might only use the wireless backhaul connections provided by the mobile network operator of the wireless communication device. The second wireless connection is established if the vehicular relay station is associated with the mobile network operator associated with the wireless communication device.

To avoid such futile connections, the wireless communication device may be informed by the vehicular relay station before the connection establishment of the second wireless connection. For example, the method may comprise receiving information on one or more mobile network operators associated with the vehicular relay station from the vehicular relay station.

In general, vehicular relay stations may be hosted by vehicles (or by vehicular infrastructure, such as traffic lights). Vehicles, in turn, communicate via vehicular communication protocols, e.g., using vehicle-to-vehicle (V2V) or vehicle-to-everything (V2X) communication. Such vehicular communication protocols have recently evolved to use frequency bands and communication protocols that are similar to the frequency bands and communication protocols being used by wireless communication devices. For example, the 5.9 GHz band being used by IEEE (Institute of Electrical and Electronics Engineers) standard 802.11p is also used in WiFi 6E (according to IEEE standard 802.11ax). Furthermore, mobile communication systems of the 3GPP are being extended for use as vehicular communication systems, e.g., using Device-to-Device (D2D) functionality included in the 4G and 5G 3GPP standards. Therefore, information being broadcast by the vehicular relay station may be received via a vehicular communication protocol by the wireless communication device, e.g., as part of a Conditional Awareness Message (CAM). For example, the information on the on one or more mobile network operators associated with the vehicular relay station may be received via a vehicular communication system.

Another factor for establishing the second wireless connection is the actual QoS of the vehicular relay station. While the increased power budget and antennae, and the option of using multiple backhaul links, are often suitable for surpassing the QoS achieved over the first wireless connection, there are a number of scenarios where either the first wireless connection supports a better QoS than the vehicular relay station or the QoS via the vehicular relay station is also unable to satisfy the desired QoS of the wireless communication device. Therefore, the QoS that can be provided by the vehicular relay station to the wireless communication device can be estimated by the vehicular relay station, and information on the estimated QoS can be provided to the wireless communication device, e.g., via a broadcast. The method may comprise receiving information on an estimated QoS of the vehicular relay station from the vehicular relay station. The second wireless connection is established if the estimated QoS of the vehicular relay station exceeds the QoS of the first wireless connection and the desired QoS of the wireless communication device.

Similar to the information on the one or more mobile network operators, the information on the estimated QoS may be broadcast over a vehicular communication system. Accordingly, the information on the estimated QoS may be received via a vehicular communication system.

Various aspects of the present disclosure relate to a corresponding apparatus for a wireless communication device. The apparatus comprises at least one interface for communicating with a base station and a vehicular relay station. The apparatus comprises one or more processors, configured to perform the method for the wireless communication device outlined above.

As is evident from the examples given above, at least some examples benefit from the wireless communication device receiving information from the vehicular relay station, e.g., on a broadcast channel. Therefore, the vehicular relay station may provide the respective information to the wireless communication device. Various aspects of the present disclosure relate to a method for a vehicular relay station. The method comprises providing information to a wireless communication device. The information comprises one or more of a) information on one or more mobile network operators associated with the vehicular relay station, and b) information on an estimated QoS of the vehicular relay station. The method comprises establishing a connection with the wireless communication device. The connection is established based on the provided information. By providing the information, the decision on whether a connection between the wireless communication device and the vehicular relay station is to be established can be supported by the vehicular relay station.

In some cases, as outlined above, the information may be transmitted to the wireless communication device via a vehicular communication system. However, the connection with the wireless communication device may be established via a non-vehicular communication system. For example, the information may be broadcast periodically by the vehicular relay station over an existing mechanism of the vehicular communication system, so it need not be requested by the wireless communication device.

In general, two different types of vehicular relay stations may be distinguished - signal relays that merely relay (and amplify) the signals transmitted by the wireless communication device, or relay stations to act as a gateway to the internet and/or to a network of the mobile network operator. For example, the vehicular relay station may act as signal relay between the wireless communication device and a base station. In this case, the vehicular relay station may support any mobile network operator being used by the wireless communication device. However, the communication may be limited to a single base station for each wireless communication device. Alternatively, the vehicular relay station acts as gateway for establishing a data connection for the wireless communication device via two or more mobile network operators and/or two or more radio access technologies. In this case, link aggregation may be performed.

Various aspects of the present disclosure relate to a corresponding apparatus for a vehicular relay station. The apparatus comprises at least one interface for communicating with a wireless communication device. The apparatus comprises one or more processors, configured to perform the method for the vehicular relay station, as outlined above.

Various aspects of the present disclosure relate to a corresponding computer program having a program code for performing at least one of the above-outlined methods for the wireless communication device and for the vehicular relay station, when the computer program is executed on a computer, a processor, or a programmable hardware component.

Some examples of apparatuses and/or methods will be described in the following by way of example only, and with reference to the accompanying figures, in which:

Figs. 1a    and 1b show flow charts of an example of a method for a wireless communication device;

Fig. 1c    shows a block diagram of an example of an apparatus for a wireless communication device, of a wireless communication device comprising such an apparatus, and of a vehicle comprising a vehicular relay station;

Fig. 2a    shows a flow chart of an example of a method for a vehicular relay station;

Fig. 2b    shows a block diagram of an example of an apparatus for a vehicular relay station and of a vehicular relay station comprising such an apparatus; and

Fig. 3    shows a schematic diagram of an example of multi-mobile network operator relaying.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

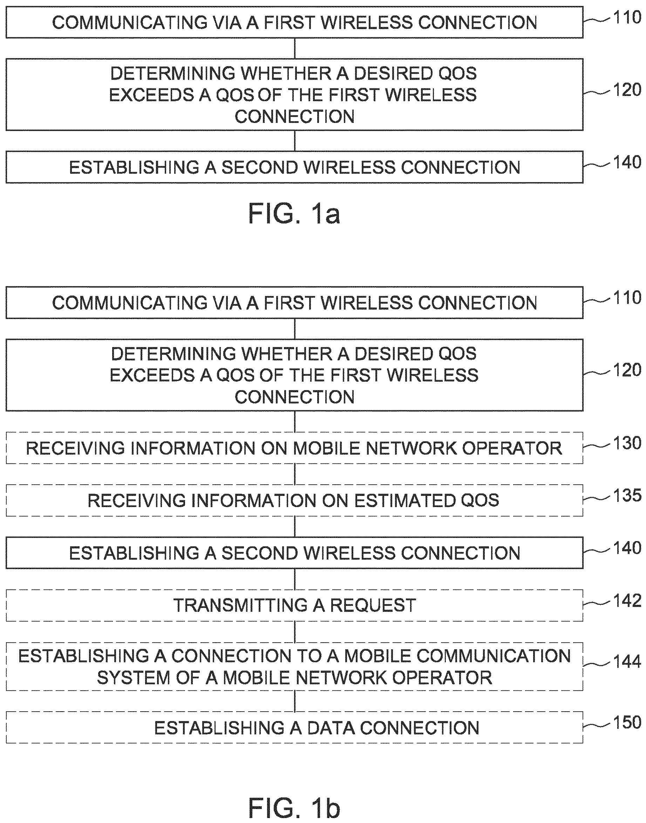

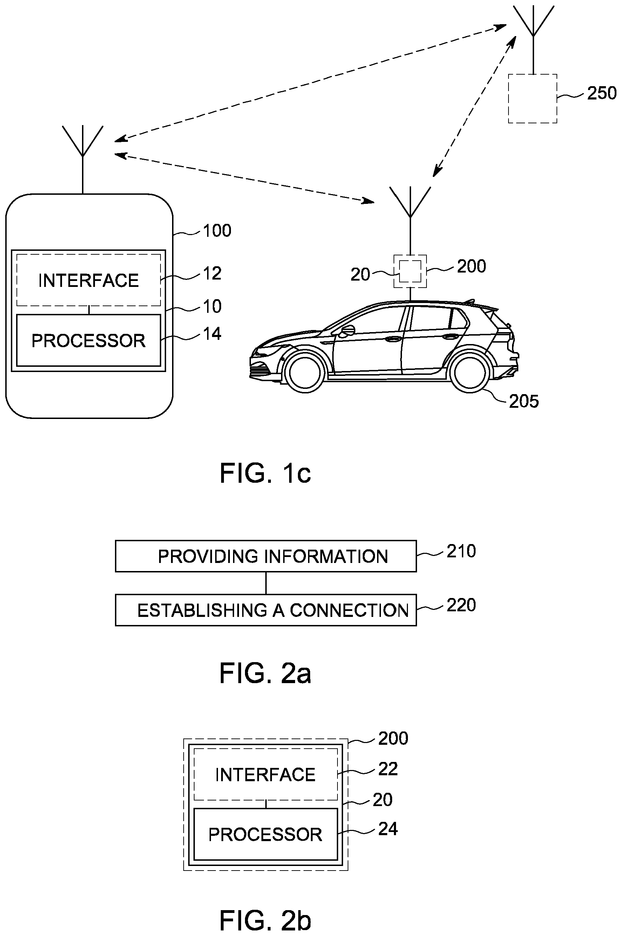

Figs. 1a and 1b show flow charts of an example of a method for a wireless communication device 100. The method comprises communicating 110 in a wireless communication network via a first wireless connection with a base station 250. The method comprises determining 120, whether a desired QoS of the wireless communication device exceeds a QoS of the first wireless connection (i.e., whether the QoS that can be provided by the first wireless connection is better than the desired QoS of the wireless communication device). The method comprises establishing 140 a second wireless connection with a vehicular relay station if the desired QoS of the wireless communication device exceeds the QoS of the first wireless connection. For example, the method may be performed by the wireless communication device, e.g., by the apparatus 10 introduced in Fig. 1c.

Fig. 1c shows a block diagram of an example of a corresponding apparatus 10 for the wireless communication device 100. The apparatus 10 comprises at least one interface 12 for communicating with the base station 250 and the vehicular relay station 200. The apparatus 10 further comprises one or more processors 14, configured to perform the method of Fig. 1a and/or 1b, e.g., in conjunction with the at least one interface 12. For example, the computational functionality of the apparatus 10 may be provided by the one or more processors 14, with communication being performed via the at least one interface 12. Fig. 1c further shows the wireless communication device 100 comprising the apparatus 10. Fig. 1c further shows a vehicle 205 comprising the vehicular relay station 200. For example, the vehicular relay station may be a wireless relay station being hosted by a vehicle. Alternatively, the vehicular relay station may be a wireless relay station being hosted by a vehicular infrastructure, such as a traffic light. Fig. 1c further shows a system comprising the wireless communication device 100 and the vehicular relay station 200, and optionally the base station 250.

The following description relates to the method of Figs. 1a and/or 1b, to the corresponding apparatus of Fig. 1c, and to a corresponding computer program. Features introduced in connection with the method may likewise be introduced into the corresponding apparatus and computer program (or vice versa).

Various aspects of the present disclosure relate to a method, apparatus and computer program for a wireless communication device. In general, a wireless communication device is a device that is capable of communicating wirelessly. In particular, however, the wireless communication device may be a mobile wireless communication device, i.e., a wireless communication device that is suitable for being carried around by a user. For example, the wireless communication device may be a User Terminal (UT) or User Equipment (UE) within the meaning of the respective communication standards being used for mobile communication. For example, the wireless communication device may be a mobile phone, such as a smartphone, or another type of mobile communication device, such as a smartwatch, a laptop computer, a tablet computer, or autonomous augmented-reality glasses. For example, the wireless communication device and the vehicular relay station may be configured to communicate in a cellular mobile communication system. Accordingly the wireless communication device and the vehicular relay station (e.g., their interfaces 12; 22) may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the wireless communication device and the vehicular relay station (e.g., their interfaces 12; 22) may be configured to communicate in a mobile communication system / cellular mobile communication system. In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Interoperability for Microwave Access (WIMAX) network IEEE 802.16, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In addition, the wireless communication device, e.g., the at least one interface 12, may be suitable for, or configured to, communicating/communicate via non-cellular communication systems, e.g. via a device-to-device vehicular communication system, e.g., according to the IEEE 802.11p standard (Institute of Electrical and Electronics Engineers standard 802.11p for vehicular communication) or via a wireless local area network (e.g., according to IEEE 802.11a, IEEE 802.11b, IEEE 802.11g, IEEE 802.11n, IEEE 802.11ac or IEEE 802.11ax, also known as Wi-Fi 1 through Wi-Fi 6(E)). In particular, the wireless communication device and the vehicular relay station (e.g., their interfaces 12; 22) may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

In some examples, the first wireless connection between the wireless communication device and the base station may be a mmWave-based connection over the mobile communication system (e.g., using carrier frequencies of at least 20 GHz). The second wireless connection to be established between the wireless communication device and the vehicular relay station may also be a mmWave-based connection, or may be performed at lower carrier frequencies, e.g. using carrier frequencies of at most 7.5 GHz. For example, the second wireless connection between the wireless communication device and the vehicular relay station may be initiated using the protocols of the mobile communication system, or using a short-range communication system, such as via a wireless local area network outlined above.

The method comprises communicating 110 in a wireless communication network via a first wireless connection with a base station 250. For example, the base station 250, the vehicular relay station 200 and the wireless communication device 100 may communicate in/via a mobile communication system. The mobile communication system may comprise a plurality of transmission points or base stations operable to communicate radio signals with a wireless communication device or wireless relay station, such as the vehicular relay station. In various examples, the mobile communication system may comprise wireless communication devices, wireless relay stations, such as the vehicular relay station, and base stations.

A base station can be located in the fixed or stationary part of the network or system. A base station may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station can be a wireless interface of a wired network, which enables transmission and reception of radio signals to a UE, such as a wireless communication device, or vehicular relay station. Such a radio signal may comply with radio signals as, for example, standardized by 3GPP or, generally, in line with one or more of the above listed systems. Thus, a base station may correspond to a NodeB, an eNodeB, a BTS, an access point, etc. A vehicular relay station may correspond to an intermediate network node in the communication path between a base station and a wireless communication device. A vehicular relay station may forward a signal received from a wireless communication device to a base station, signals received from the base station to the mobile station transceiver, respectively.

In some examples, the vehicular relay station may also act as a small cell base station, e.g., as a pico cell or femto cell base station. In some examples, the vehicular relay station may act as signal relay between the wireless communication device and a base station. In some examples, the vehicular relay station may support simultaneous wireless backhaul connections to multiple base stations (of the same or different mobile network operators) and/or simultaneous wireless backhaul connections to the same base station over multiple radio access technologies (e.g. a mmWave-based and a sub-6 GHz-based wireless backhaul connection at the same). In particular, the vehicular relay station may be associated with, and thus suitable for or configured to connecting/connect to, two or more wireless base stations of two or more mobile network operators. Additionally, the vehicular relay station is also associated with, and thus suitable for or configured to connecting/connect to, one or more base stations using two or more (different) radio access technologies. In some examples, the vehicular relay station acts as a (internet protocol-based) gateway, suitable for data communication via two or more mobile network operators and/or two or more radio access technologies.

The mobile communication system may be cellular. The term cell refers to a coverage area of radio services provided by a transmission point, a remote unit, a remote head, a remote radio head, a base station, vehicular relay station or a NodeB, an eNodeB, respectively. The terms cell and base station may be used synonymously. In some examples a cell may correspond to a sector. For example, sectors can be achieved using sector antennas, which provide a characteristic for covering an angular section around a base station or remote unit. In some examples, a base station or remote unit may, for example, operate three or six cells covering sectors of 120° (in case of three cells), 60° (in case of six cells) respectively. Likewise a wireless relay station, such as the vehicular relay station, may establish one or more cells in its coverage area. A wireless communication device can be registered or associated with at least one cell, i.e. it can be associated to a cell such that data can be exchanged between the network and the mobile in the coverage area of the associated cell using a dedicated channel, connection or connection. A wireless communication device may hence register or be associated with a wireless relay station, such as the vehicular relay station, or base station directly or indirectly, where an indirect registration or association may be through one or more vehicular relay stations.

Various examples of the vehicular relay station may improve the cellular coverage in a vehicle, such as the vehicle 205. A vehicular relay station may be used in order to connect multiple terminals (wireless communication devices) inside of the vehicle and provide an aggregated connection to a stationary cellular communication system via a wireless backhaul connection to a stationary cellular communications network, for example, over one or more external vehicle antennas. In the following the connection between a stationary base station and an external antenna of a vehicle relay node may be denoted as relay or backhaul connection; the connection between a relay node and end user terminals will be denoted as access connection.

Such a vehicular relay station may, for example, correspond to a relay as defined in 3GPP Release 10 and following, e.g., a moving relay or mobile relay as introduced in connection with 3GPP Release 12 and following, a wireless repeater (analog or digital), or a femto cell with a wireless backhaul connection. In case of a femto cell, the wireless backhaul connection could be provided over a separate cellular communication terminal, e.g., a 2G/3G/4G/5G modem. It is another finding that for the relay connection and for the access connection, respectively, the same or different frequency and spectrum resources can be used.

The proposed concept starts with the wireless communication device 100 being connected to the base station via the first wireless connection. In general, the wireless communication device 100 might only be connected to a single other entity of the mobile communication system, e.g., either to a base station, such as the base station 250, or to a vehicular relay station, such as the vehicular relay station. While the wireless communication device is connected to the base station, it may discover the presence of the vehicular relay station, e.g. based on a transmission of the vehicular relay station on a wireless broadcast channel of the mobile communication system, based on a transmission of the vehicular relay station on a wireless broadcast channel of a vehicular communication system, or based on information on adjacent cells suitable as possible handover candidates being provided by the base station 200. For example, the method may comprise broadcasting a request to discover the vehicular relay station.

As is evident from the above example, while the communication between wireless communication device and vehicular relay station and between wireless communication device and base station primarily occurs via the mobile communication system, additional communication between the vehicular relay station and the wireless communication device, or at least from the vehicular relay station to the wireless communication device, may occur via a vehicular communication system. Such communication may be carried out directly, e.g. by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc.

The proposed concept is used to deal with scenarios, where the QoS of the first wireless connection is insufficient for satisfying the desired QoS of the wireless communication device, e.g. with respect to a desired throughput/data rate. For example, the QoS may comprise one or more of a throughput, a latency or latency budget and a reliability (e.g., error rate). In some cases, in addition or alternatively to the desired throughput/data rate, the QoS may be insufficient with respect to the error rate or with respect to the latency of the first wireless connection, relative to the desired error rate or latency of the wireless communication device. For example, some applications, such as an internet-based video or audio telephony, or streaming of content for augmented-reality glasses, might not only require a large data rate, but also low latency and low error rate. If any of the above criteria is deemed to be insufficiently provided via the first wireless connection (or is about to be insufficiently provided, as the wireless communication device moves away from the base station), the determination 120 may be made, that the desired QoS of the wireless communication device exceeds the QoS (e.g., with respect to data rate, latency or error rate) of the first wireless connection. If this is the case, the wireless communication device may consider establishing 140 the connection to the vehicular relay station. For example, the connection establishment may be triggered by the wireless communication device, e.g., after determining that the connection is to be established as the vehicular relay station is likely to provide an improved QoS.

In many cases, the assumption is that the QoS provided by the vehicular relay station is superior to the QoS of the first wireless connection, e.g., due to the advantages with respect to antenna placement and power budget, and/or due to the use of multiple wireless backhaul links. On the other hand, the vehicular relay station may be shared by multiple wireless communication devices, so the resulting available QoS might not be (substantially) better, or even worse, than the QoS of the first wireless connection. Therefore, the method may comprise determining an estimated QoS of the vehicular relay station. In particular, the method may comprise receiving 135 information on the estimated QoS of the vehicular relay station from the vehicular relay station. For example, the information on the estimated QoS may be broadcast by the vehicular relay station, e.g., via a broadcast channel of the mobile communication system or via the vehicular communication system. In other words, the information on the estimated QoS may be received 135 via a vehicular communication system. If the estimated QoS of the vehicular relay station exceeds the desired QoS, or at least exceeds the QoS of the first wireless connection, the second wireless connection may be established. In other words, the second wireless connection may be established if the estimated QoS of the vehicular relay station exceeds the QoS of the first wireless connection and/or the desired QoS of the wireless communication device. In this context, the "estimated QoS of the vehicular relay station" might not necessarily relate to the overall maximal throughput of the vehicular relay station but might depend on the utilization of the vehicular relay station (by multiple wireless communication devices) and/or on whether the wireless communication device gains access to the throughput of multiple or only a single wireless backhaul connection.

Another factor in the establishment 140 of the second wireless connection may be the mobile network operator being used by the wireless communication device, e.g., for the first wireless connection. For example, while a vehicular relay station may be able to provide a superior throughput compared to the first wireless connection, this QoS may come at the expense of the operator of the vehicular relay station. In some examples, this may be avoided if the vehicular relay station is merely used as an intermediary between the wireless communication device and its mobile network operator, i.e., if the data and/or voice connections routed via the vehicular relay station are counted towards the allowance of the wireless communication device, instead of being charged to the operator of the vehicular relay station. Therefore, while the second wireless connection may support simultaneous wireless backhaul connections to the base stations of two or more mobile network provides, the data transmitted via the second wireless connection may be restricted to the wireless backhaul connection to the base station of the mobile network operator associated with the wireless communication device. To inform the vehicular relay station of the mobile network provider associated with the wireless communication device, information on the mobile network provider associated with the wireless communication device may be provided to the vehicular relay station as part of the connection establishment. In other words, the act of establishing 140 the second wireless connection may comprise transmitting 142 a request to the vehicular relay station. The request may comprise information on the mobile network operator associated with the wireless communication device. The method may comprise establishing 144 a connection to the mobile communication system of the mobile network operator via the vehicular relay station (and the second wireless connection). For example, a tunnel (i.e., a bearer) may be established between the wireless communication device and the mobile communication system of the mobile network operator or between the vehicular relay station and the mobile communication system of the mobile network operator.

Under the above assumption, the second wireless connection might only be established if the vehicular relay station can be used to establish a connection to the mobile communication system of the mobile network operator. Accordingly, the second wireless connection may be established 140 if the vehicular relay station is associated with the mobile network operator associated with the wireless communication device. To avoid futile attempts at establishing the second wireless connection (in case the vehicular relay station is not associated with the mobile network operator associated with the wireless communication device), the wireless communication device may be informed of the mobile network operator (or operators) being associated with the vehicular relay station. Accordingly, the method may comprise receiving 130 information on one or more mobile network operators associated with the vehicular relay station from the vehicular relay station. Establishing the second wireless connection may be omitted if the one or more mobile network operators associated with the vehicular relay station do not match the mobile network operator associated with the wireless communication device.

Again, the information on the one or more mobile network operators associated with the vehicular relay station may be broadcast by the vehicular relay station, e.g., via the broadcast channel of the mobile communication system or as broadcast via the vehicular communication system and received as broadcast by the wireless communication device. In particular, the information on the on one or more mobile network operators associated with the vehicular relay station may be received via a vehicular communication system.

However, in some examples, such limitation to the mobile network operator associated with the wireless communication device might not exist. In other words, the wireless communication device may be allowed access to the wireless connectivity provided via wireless backhaul connections to base stations of two or more mobile network operators. In this case, the wireless communication device may utilize the available QoS, e.g., throughput, using link aggregation. For example, the method may comprise establishing 150 a data connection via the second wireless connection and via two of the two or more mobile network operators and/or two of the two or more radio access technologies. For example, the data connection may aggregate the throughput of two or more wireless backhaul connections established via two of the two or more mobile network operators and/or two of the two or more radio access technologies. In this case, the vehicular relay station may be used as gateway for the wireless communication device, e.g., as gateway for establishing data connections. In general, link aggregation may use a gateway at the entry and exit points of the data connection, so the data transmitted via the data connection can be split onto the links by the entry gateway and then recombined by the exit gateway. For example, the data connection may be established between the vehicular relay station (as entry gateway) and terminated at a server of an operator of the vehicular relay station (as exit gateway, or vice versa for transmissions to the wireless communication device). Alternatively, a best-effort approach may be chosen, e.g., based on the multipath-variant of the transmission control protocol (Multipath-TCP), with the Multipath-TCP session being initiated by the wireless communication device on the application layer.

In various examples, the at least one interface 12 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The at least one interface 12 may comprise further components to enable according communication in the mobile communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The at least one interface 12 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the at least one interface 12 may serve the purpose of transmitting or receiving or both, transmitting and receiving, information, such as information, input data, control information, further information messages, etc.

As shown in Fig. 1c the at least one interface 12 is coupled to the one or more processors 14 at the apparatus 10. For example, the one or more processors 14 may be implemented using one or more processing units, one or more processing devices or any means for processing, such as a processor, a computer or a programmable hardware component being operable with accordingly adapted software. In other words, the described functionality of the one or more processors may as well be implemented in software, which is then executed on one or more programmable hardware components. Such hardware components may comprise a generalpurpose processor, a Digital Signal Processor (DSP), a micro-controller, etc.

For example, the vehicle 205 may be a land vehicle, such a road vehicle, a car, an automobile, an off-road vehicle, a motor vehicle, a bus, a robo-taxi, a van, a truck or a lorry. Alternatively, the vehicle 205 may be any other type of vehicle, such as a train, a subway train, a boat or a ship. For example, the proposed concept may be applied to public transportation (trains, bus) and future means of mobility (e.g., robo-taxis).

More details and aspects of the wireless communication device and of the vehicular relay station are mentioned in connection with the proposed concept or one or more examples described above or below (e.g. Fig. 2a to 3). The wireless communication device and vehicular relay station may comprise one or more additional optional features corresponding to one or more aspects of the proposed concept or one or more examples described above or below.

In Figs. 1a to 1c, the focus of the present disclosure was on the wireless communication device. As is evident from the examples given above, the wireless communication device benefits from information being provided by the vehicular relay station, to make the determination on whether or when to establish the connection with the vehicular relay station. In the following, a method and apparatus for the vehicular relay station are presented, which may be used to provide said information to the wireless communication device.

Fig. 2a shows a flow chart of an example of a method for the vehicular relay station 200. The method comprises providing 210 information to the wireless communication device 100. The information comprises one or more of a) information on one or more mobile network operators associated with the vehicular relay station, and b) information on an estimated QoS of the vehicular relay station. The method comprises establishing 220 a connection with the wireless communication device, wherein the connection is established based on the provided information. For example, the method may be performed by the vehicular relay station 200, e.g., by the apparatus 20 of Fig. 2b.

Fig. 2b shows a block diagram of an example of a corresponding apparatus 20 for the vehicular relay station 200 and of the vehicular relay station 200 comprising the apparatus 20. The apparatus 20 comprises at least one interface 22 for communicating with the wireless communication device 100. The apparatus 20 further comprises one or more processors 24, configured to perform the method of Fig. 2a, , e.g., in conjunction with the at least one interface 22. For example, the computational functionality of the apparatus 20 may be provided by the one or more processors 24, with communication being performed via the at least one interface 24. Examples further provide a vehicle (as shown in Fig. 1c) comprising the vehicular relay station 200 with the apparatus 20. For example, the vehicular relay station 200 may be a wireless relay station being hosted by a vehicle. Alternatively, the vehicular relay station may be a wireless relay station being hosted by a vehicular infrastructure, such as a traffic light.

The following description relates to the method of Fig. 2a, the corresponding apparatus 20 of Fig. 2b, and to a corresponding computer program. Features introduced in connection with the method may likewise be introduced into the corresponding apparatus.

The vehicular relay station initially introduced in connection with Figs. 1a to 1c, and introduced in more detail in Figs. 2a and 2b, is a counterpart to the wireless communication device introduced in connection with Figs. 1a to 1c. The wireless communication device makes a determination on whether or when to connect to the vehicular relay station. Optionally, the vehicular relay station supports that determination with the information outlined above. To establish the connection, and to provide the above-mentioned information, the wireless communication device communication device and the vehicular relay station may communicate with each other. In this context, two types of communication may be distinguished - communication being performed before the connection establishment, and communication that occurs as part of, and after, the connection establishment.

The communication that occurs before connection establishment, and that may be used to provide said information, may be based on broadcasts of the vehicular relay station, e.g., via the mobile communication system and/or the vehicular communication system introduced in connection with Figs. 1a to 1c. Accordingly, the vehicular relay station, and in particular the at least one interface 22, may be suitable for, or configured to, communicate in/via the mobile communication system and/or the vehicular communication system. For example, the vehicular relay station, and in particular the at least one interface 22, may be configured to communicate via one or more antennas placed at the outside of the vehicle via the mobile communication system or via the vehicular communication system, e.g., with other communication devices outside the vehicle, such as base stations for the purpose of maintaining wireless backhaul connections. Additionally, the vehicular relay station, and in particular the at least one interface 22, may be configured to communicate via short-range communication, e.g., via a wireless local area network according to a variant of the IEEE 802.11 standard, via Bluetooth or via UWB.

For example, the information provided 210 from the vehicular relay station to the wireless communication device may be provided as broadcast, e.g., via a broadcast channel of the mobile communication system or as broadcast via the vehicular communication system (e.g., as CAM). The connection establishment, on the other hand, may establish a connection via the mobile communication system. Correspondingly, in some examples, the information may be provided 210 via the vehicular communication system and the connection may be established via a non-vehicular communication system (or at least communication system that is not exclusively used for vehicular communication), such as the mobile communication system. In general, the connection being established 220 is based on the provided information. For example, the connection establishment 220 may be triggered, or be made dependent, based on the provided 210 information. For example, the connection establishment may be triggered by the wireless communication device. For example, the vehicular relay station may receive a request for connection establishment that is transmitted by the wireless communication device and establish 220 the connection based on the received request.

In some examples, the vehicular relay station may merely act as signal relay between the wireless communication device and a base station. In other words, after the connection has been established, the vehicular relay station may repeat (and amplify) signals received from the wireless communication device, so they are transmitted to the base station, and repeat signals from the base station and destined for the wireless communication device so they are transmitted to the wireless communication device. For example, such operation of the vehicular relay station may be largely mobile network operator-independent, i.e., the mobile network operator may communicate directly with the wireless communication device, with the vehicular relay station acting as a (transparent) signal relay.

In some examples, the functionality of the vehicular relay station is more complex, however. For example, the vehicular relay station may act as a small-cell (e.g., pico-cell or femto-cell) base station towards the wireless communication device, or as a data gateway. In the former case, the vehicular relay station may operate one or more cells that provide cellular coverage for the wireless communication device (and other wireless communication devices). In the latter case, merely an internet protocol (IP)-based connection may be established between the wireless communication device and the vehicular relay station. In both cases, the vehicular relay station may act as gateway for establishing a data connection for the wireless communication device. For example, as outlined in connection with Figs. 1a to 1c, the vehicular relay station may act as gateway for establishing a data connection for the wireless communication device via two or more mobile network operators and/or two or more radio access technologies.

In general, the wireless communication device may establish one or more wireless backhaul connections to one or more base stations of one or more mobile network providers, e.g., via one or more radio access technologies. In some examples, data transmitted by the wireless communication device may be limited to one of the wireless backhaul connections, e.g., to a wireless backhaul connection to a mobile communication system of a mobile network operator associated with the wireless communication device. Such cases may be handled by including information in the request received from the wireless communication device. Accordingly, the method may comprise receiving a request from the wireless communication device, with the request comprising information on a mobile network operator associated with the wireless communication device. Optionally, the request may further comprise information on the desired QoS of the wireless communication device and/or information on the QoS of the wireless connection between the wireless communication device and a base station. If the mobile network operator associated with the wireless communication device is also associated with the vehicular relay station, the connection with the wireless communication device may be established, and data received from the wireless communication device may be forwarded to the mobile communication system of the mobile network operator, e.g., via the wireless backhaul connection to the mobile communication system of the mobile network operator. If such a wireless backhaul connection is not currently active, it may be established to establish the connection to the mobile communication system of the mobile network operator associated with the wireless communication device.

In some examples, however, a data connection provided by the vehicular relay station spans the mobile communication systems of multiple mobile network operators and/or multiple radio access technologies. For example, the vehicular relay station may establish two or more wireless backhaul links and may provide link aggregation via the two or more wireless backhaul links, e.g., between the vehicular relay station (as entry gateway towards the wireless communication device) and a server of an operator of the vehicular relay station (as exit gateway, or vice versa for data transmitted to the wireless communication device). The aggregated links may be used to provide the data connection for the wireless communication device.

As outlined above, at least one of two types of information is provided to the wireless communication device - a) information on one or more mobile network operators associated with the vehicular relay station, and b) information on an estimated QoS of the vehicular relay station. The information on the one or more mobile network operators associated with the vehicular relay station may either be static information - as the vehicular relay station is equipped with SIM cards of a pre-defined set of the mobile network operators - or variable information - e.g., if the vehicular relay station supports a maximal number of wireless backhaul links that is lower than the number of mobile network operators associated with the vehicular relay station, such that only a subset of the mobile network operators are supported at a given time. In both cases, the method may comprise determining the information on the one or more mobile network operators associated with the vehicular relay station, either based on the pre-defined set of the mobile network operators, or based on the wireless backhaul connections that are currently established or that can be established in addition to the currently established wireless backhaul connections.

The vehicular relay station provides information on the estimated QoS of the vehicular relay station to the wireless communication device. In this context, the estimated QoS of the vehicular relay station relates to the estimated QoS that can be made available to the wireless communication device. If n wireless communication devices access the vehicular relay station, each wireless communication device might be guaranteed $\frac{1}{n}$ of the overall throughput capacity of the vehicular relay station. In practice, as most wireless communication devices do not continuously transmit data, the throughput available for the individual wireless communication devices may be higher than the guaranteed share of the overall throughput. Furthermore, the more wireless communication devices are connected to the vehicular relay station, the higher the latency may become. The method comprises estimating the QoS of the vehicular relay station that can be made available to the wireless communication device, e.g., based on the QoS of the (wireless) backhaul connection or connections between the vehicular relay station and a base station, and based on the number of wireless communication devices accessing the vehicular relay station. In some cases, as outlined above, the wireless communication device is limited to the wireless backhaul connection (or connections) to the mobile communication system of the mobile network operator associated with the wireless communication device. In this case, the QoS of the vehicular relay station is determined based on the QoS of the wireless backhaul connection to the mobile communication system of the mobile network operator associated with the wireless communication device. Once the QoS that can be made available to the wireless communication device is estimated, the information on the estimated QoS is determined, and the information is provided to the wireless communication device.

Both types of information mentioned above may be provided upon request of the wireless communication device or may be broadcast periodically via the broadcast channel of the mobile communication system or via the vehicular communication system (e.g., as part of a CAM).

In various examples, the at least one interface 22 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless, or wireline and it may be configured to communicate, i.e. transmit or receive signals, information with further internal or external components. The at least one interface 22 may comprise further components to enable according communication in the mobile communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The at least one interface 22 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the at least one interface 22 may serve the purpose of transmitting or receiving or both, transmitting and receiving, information, such as information, input data, control information, further information messages, etc. For example, at least some of the antennas may be arranged at the outside of the vehicle hosting the vehicular relay station and/or at least some of the antennas may be arranged within the cabin of the vehicle hosting the vehicular relay station.

As shown in Fig. 2b the at least one interface 22 is coupled to the one or more processors 24 at the apparatus 20. For example, the one or more processors 24 may be implemented using one or more processing units, one or more processing devices or any means for processing, such as a processor, a computer or a programmable hardware component being operable with accordingly adapted software. In other words, the described functionality of the one or more processors may as well be implemented in software, which is then executed on one or more programmable hardware components. Such hardware components may comprise a generalpurpose processor, a Digital Signal Processor (DSP), a micro-controller, etc.

As is evident from the above examples, various examples of the present disclosure relate to multi-MNO relaying for mobile devices in low or out of coverage. The development of 5G has brought increased attention to the automotive industry as a vertical integration expected to leverage the most advanced features of the new generation of wireless communications. Even in the case of 5G the user may face low or out of coverage situations, depending on the used sim card, i.e. coverage provided by the MNO, it uses. Consequently, a mobile device, i.e. a UT, might experience low or out of coverage. The UT may use (only) one MNO (as it uses (only) one sim card) and might not able be to obtain the required QoS (e.g., throughput).

In the following, an example of an approach is given for dealing with the above scenario. First, the UT (e.g. the wireless communication device 100 of Figs. 1a to 2b) may determine a low- or out of coverage situation (i.e., that the desired QoS of the wireless communication device exceeds the QoS of the first wireless connection) and determine the current/experienced QoS $C_{exp}$. The UT may also determine the required (i.e., desired) QoS $C_{req}$. The UT may search for relaying systems (RS, e.g., the vehicular relay station of Figs. 1a to 2b). The request may also include information which sim card, i.e. MNO, it uses, $C_{exp}$ and $C_{req}$. A RS may receive the request and compare the QoS of the UT which the one it may offer through relaying one or multiple MNO connectivity. It may relay one or even combine multiple MNO connectivity's to relay the UT. It may also consider multi-radio access technologies (RATs).

The proposed concept may thus use vehicles or infrastructure elements (as powerful communication nodes) as outdoor Relaying System (RS). The Relaying System (RS) may also be able to relay UT-BS/BS-UT (from the UT to the BS and from the BS to the US) by using only the external antenna system, e.g., for the sake of power efficiency at the UT side. Vehicles or infrastructure elements may have multiple sim cards (multi-MNO connectivity). A vehicle might have high a QoS (Quality of Service) with at least one MNO. In general, not only a vehicle may be suitable for hosting the RS, but also infrastructure, e.g. traffic lights etc.

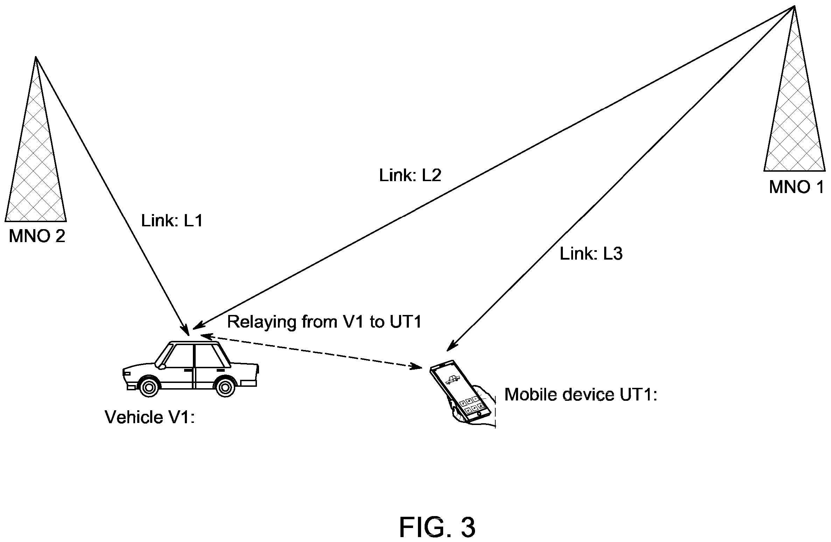

Fig. 3 shows a schematic diagram of an example of multi-mobile network operator relaying. Fig. 3 depicts a UT1 (e.g., the wireless communication device 100 of Figs. 1a to 2b) which has a connection L3 (e.g., the first wireless connection) to MNO1 (e.g., the base station 250). This connection might only offer a low QoS, e.g., a low QoS. Therefore, UT1 may request (broadcast) the support of an RS. It may provide the information of the current QoS $C_{exp}$ of L3 and that it uses MNO1. In addition it may state its required QoS $C_{req}$. The V1 (e.g., the vehicular relay station 200 of Figs. 1a to 2b) may receive this message and verify if it can support UT1 by relaying (the data of UT1) via wireless backhaul connections L1 and L2 to MNO1 and MNO2.

For example, the proposed concept may be used in public transportation (trains, bus) and future means of mobility (robo-taxis), e.g., by integrating the RS in the respective vehicles.

More details and aspects of the example of Fig. 3 are mentioned in connection with the proposed concept or one or more examples described above or below (e.g.

Fig. 1a to 2b). The wireless communication device and vehicular relay station may comprise one or more additional optional features corresponding to one or more aspects of the proposed concept or one or more examples described above or below.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

List of reference signs

| 10 | Apparatus |
|---|---|
| 12 | At least one interface |
| 14 | One or more processors |
| 20 | Apparatus |
| 22 | At least one interface |
| 24 | One or more processors |
| 100 | Wireless communication device |
| 110 | Communicating via first wireless connection |
| 120 | Determining whether a desired QoS exceeds a QoS of the first wireless connection |
| 130 | Receiving information a mobile network operator |
| 135 | Receiving information on estimated QoS |
| 140 | Establishing a second wireless connection |
| 142 | Transmitting a request |
| 144 | Establishing a connection to a mobile communication system of a mobile network operator |
| 150 | Establishing a data connection |
| 200 | Vehicular relay station |
| 205 | Vehicle |
| 210 | Providing information |
| 220 | Establishing a connection |
| 250 | Base station |
| L1 | Link 1 |
| L2 | Link 2 |
| L3 | Link 3 |
| MNO1 | Mobile network operator 1 |
| MNO2 | Mobile network operator 2 |
| UT1 | User terminal 1 |
| V1 | Vehicle 1 |

**Claims**

1. A method for a wireless communication device (100) , the method comprising communicating (110), by the wireless communication device, in a wireless communication network via a first wireless connection with a base station (250); determining (120), by the wireless communication device, whether a desired Quality of Service, QoS, of the wireless communication device exceeds a QoS of the first wireless connection; and

receiving (135), by the wireless communication device, information on an estimated QoS of a vehicular relay station from the vehicular relay station,

the vehicular relay station acting as gateway for establishing a data connection for the wireless communication device via two or more network operators and/or two or more radio access technologies, the data connection provided by the vehicular relay station spanning the mobile communication systems of multiple mobile network operators and/or multiple radio access technologies via two or more wireless backhaul connections,

wherein the estimated QoS of the vehicular relay station relates to the estimated QoS that can be made available to the wireless communication device, with the estimated QoS being based on the QoS of the wireless backhaul connections between the vehicular relay station and one or more base stations and based on a number of wireless communication devices accessing the vehicular relay station;

establishing (140), by the wireless communication device, a second wireless connection with the vehicular relay station if the desired QoS of the wireless communication device exceeds the QoS of the first wireless connection and in case that at least one of a) the estimated QoS of the vehicular relay station exceeds the QoS of the first wireless connection and b) the estimated QoS of the vehicular relay station exceeds the desired QoS of the wireless communication device,

wherein the act of establishing (140) the second wireless connection comprises transmitting (142), by the wireless communication device, a request to the vehicular relay station, the request comprising information on a mobile network operator associated with the wireless communication device, and establishing (144), by the wireless communication device, a connection to the mobile communication system of the mobile network operator via the vehicular relay station, and

wherein the second wireless connection is established (140) if the vehicular relay station is associated with the mobile network operator associated with the wireless communication device.

2. The method according to claim 1, comprising establishing (150), by the wireless communication device, a data connection via the second wireless connection and via two of the two or more mobile network operators and/or two of the two or more radio access technologies.

3. The method according to one of the claims 1 or 2, comprising receiving (130), by the wireless communication device, information on one or more mobile network operators associated with the vehicular relay station from the vehicular relay station.

4. The method according to claim 3, wherein the information on the on one or more mobile network operators associated with the vehicular relay station is received via a vehicular communication system.

5. The method according to one of the claims 1 to 4, wherein the information on the estimated QoS is received via a vehicular communication system.

6. A computer program having a program code for performing a method according to any one of the claims 1 to 5, when the computer program is executed on a computer, a processor, or a programmable hardware component.

7. A wireless communication device (100) comprising:

at least one interface (12) for communicating with a wireless base station and a vehicular relay station; and
one or more processors (14), configured to perform the method according to any of the claims 1 to 5.

**Patentansprüche**

1. Verfahren für eine drahtlose Kommunikationsvorrichtung (100), das Verfahren umfassend:

Kommunizieren (110), durch die drahtlose Kommunikationsvorrichtung in einem drahtlosen Kommunikationsnetz über eine erste drahtlose Verbindung mit einer Basisstation (250);
Bestimmen (120), durch die drahtlose Kommunikationsvorrichtung, ob eine gewünschte Dienstqualität, QoS, der drahtlosen Kommunikationsvorrichtung eine QoS der ersten drahtlosen Verbindung überschreitet; und
Empfangen, (135), durch die drahtlose Kommunikationsvorrichtung, von Informationen über eine geschätzte QoS einer Fahrzeug-Relaisstation von der Fahrzeug-Relaisstation,
wobei die Fahrzeug-Relaisstation als Gateway zum Herstellen einer Datenverbindung für die drahtlose Kommunikationsvorrichtung über zwei oder mehr Netzbetreiber und/oder zwei oder mehr Funkzugangstechnologien fungiert, wobei die Datenverbindung, die durch die Fahrzeug-Relaisstation bereitgestellt wird, die Mobilkommunikationssysteme mehrerer Mobilnetzbetreiber und/oder mehrerer Funkzugangstechnologien über zwei oder mehr drahtlose Backhaul-Verbindungen überspannt,

wobei sich die geschätzte QoS der Fahrzeug-Relaisstation auf die geschätzte QoS bezieht, die der drahtlosen Kommunikationsvorrichtung zur Verfügung gestellt werden kann, wobei die geschätzte QoS auf der QoS der drahtlosen Backhaul-Verbindungen zwischen der Fahrzeug-Relaisstation und einer oder mehreren Basisstationen und auf einer Anzahl von drahtlosen Kommunikationsvorrichtungen basiert, die auf die Fahrzeug-Relaisstation zugreifen;

Herstellen (140), durch die drahtlose Kommunikationsvorrichtung, einer zweiten drahtlosen Verbindung mit der Fahrzeug-Relaisstation, falls die gewünschte QoS der drahtlosen Kommunikationsvorrichtung die QoS der ersten drahtlosen Verbindung überschreitet, und für den Fall, dass mindestens eines gilt von: a) die geschätzte QoS der Fahrzeug-Relaisstation überschreitet die QoS der ersten drahtlosen Verbindung und b) die geschätzte QoS der Fahrzeug-Relaisstation überschreitet die gewünschte QoS der drahtlosen Kommunikationsvorrichtung,

wobei der Vorgang des Herstellens (140) der zweiten drahtlosen Verbindung das Senden (142), durch die drahtlose Kommunikationsvorrichtung, einer Anfrage an die Fahrzeug-Relaisstation umfasst, die Anfrage umfassend Informationen über einen Mobilfunknetzbetreiber, der mit der drahtlosen Kommunikationsvorrichtung verknüpft ist, und das Herstellen (144), durch die drahtlose Kommunikationsvorrichtung, einer Verbindung mit dem Mobilkommunikationssystem des Mobilfunknetzbetreibers über die Fahrzeug-Relaisstation, und

wobei die zweite drahtlose Verbindung hergestellt (140) wird, falls die Fahrzeug-Relaisstation mit dem Mobilfunknetzbetreiber verknüpft ist, der mit der drahtlosen Kommunikationsvorrichtung verknüpft ist.

2. Verfahren nach Anspruch 1, umfassend das Herstellen (150), durch die drahtlose Kommunikationsvorrichtung, einer Datenverbindung, über die zweite drahtlose Verbindung und über zwei der zwei oder mehr Mobilfunknetzbetreiber und/oder zwei der zwei oder mehr Funkzugangstechnologien.

3. Verfahren nach einem der Ansprüche 1 oder 2, umfassend das Empfangen (130), durch die drahtlose Kommunikationsvorrichtung, von Informationen über einen oder mehrere Mobilfunknetzbetreiber, die mit der Fahrzeug-Relaisstation von der Fahrzeug-Relaisstation verknüpft sind.

4. Verfahren nach Anspruch 3, wobei die Informationen über den oder die mehreren Mobilfunknetzbetreiber, die mit der Fahrzeug-Relaisstation verknüpft sind, über ein Fahrzeugkommunikationssystem empfangen werden.

5. Verfahren nach einem der Ansprüche 1 bis 4, wobei die Informationen über die geschätzte QoS über ein Fahrzeugkommunikationssystem empfangen werden.

6. Computerprogramm, das einen Programmcode zum Durchführen eines Verfahrens nach einem der Ansprüche 1 bis 5 aufweist, wenn das Computerprogramm auf einem Computer, einem Prozessor oder einer programmierbaren Hardwarekomponente ausgeführt wird.

7. Drahtloses Kommunikationsvorrichtung (100), umfassend:

mindestens eine Schnittstelle (12) zum Kommunizieren mit einer drahtlosen Basisstation und einer Fahrzeug-Relaisstation, und einen oder mehrere Prozessoren (14), die konfiguriert sind, um das Verfahren nach einem der Ansprüche 1 bis 5 durchzuführen.

**Revendications**

1. Procédé pour un dispositif de communication sans fil (100), le procédé comprenant :

la communication (110), par le dispositif de communication sans fil, dans un réseau de communication sans fil par le biais d'une première connexion sans fil avec une station de base (250) ;
la détermination (120), par le dispositif de communication sans fil, du fait de savoir si une qualité de service, QoS, souhaitée du dispositif de communication sans fil dépasse une QoS de la première connexion sans fil ; et
la réception (135), par le dispositif de communication sans fil, d'informations sur une QoS estimée d'une station relais de véhicule à partir de la station relais de véhicule,
la station relais de véhicule sert de passerelle pour établir une connexion de données pour le dispositif de communication sans fil par le biais de deux opérateurs de réseau ou plus et/ou deux technologies d'accès radio ou plus, la connexion de données fournie par la station relais de véhicule couvrant les systèmes de communication mobile de multiples opérateurs de réseau mobile et/ou de multiples technologies d'accès radio par le biais de deux connexions de raccordement sans fil ou plus,

dans lequel la QoS estimée de la station relais de véhicule se rapporte à la QoS estimée qui peut être mise à la disposition du dispositif de communication sans fil, la QoS estimée étant basée sur la QoS des connexions de raccordement sans fil entre la station relais de véhicule et une ou plusieurs stations de base et sur le nombre de dispositifs de communication sans fil accédant à la station relais de véhicule ;

l'établissement (140), par le dispositif de communication sans fil, d'une seconde connexion sans fil avec la station relais de véhicule si la QoS souhaitée du dispositif de communication sans fil dépasse la QoS de la première connexion sans fil et dans le cas où au moins l'un parmi a) la QoS estimée de la station relais de véhicule dépasse la QoS de la première connexion sans fil et b) la QoS estimée de la station relais de véhicule dépasse la QoS souhaitée du dispositif de communication sans fil,

dans lequel l'acte d'établissement (140) de la seconde connexion sans fil comprend la transmission (142), par le dispositif de communication sans fil, d'une demande à la station relais de véhicule, la demande comprenant des informations sur un opérateur de réseau mobile associé au dispositif de communication sans fil, et l'établissement (144), par le dispositif de communication sans fil, d'une connexion au système de communication mobile de l'opérateur de réseau mobile par le biais de la station relais de véhicule, et

dans lequel la seconde connexion sans fil est établie (140) si la station relais de véhicule est associée à l'opérateur de réseau mobile associé au dispositif de communication sans fil.

2. Procédé selon la revendication 1, comprenant l'établissement (150), par le dispositif de communication sans fil, d'une connexion de données par le biais de la seconde connexion sans fil et par le biais de deux des deux opérateurs de réseau mobile ou plus et/ou deux des deux technologies d'accès radio ou plus.

3. Procédé selon l'une des revendications 1 ou 2, comprenant la réception (130), par le dispositif de communication sans fil, d'informations sur un ou plusieurs opérateurs de réseau mobile associés à la station relais de véhicule à partir de la station relais de véhicule.

4. Procédé selon la revendication 3, dans lequel les informations sur le ou les opérateurs de réseau mobile associés à la station relais de véhicule sont reçues par le biais d'un système de communication de véhicule.

5. Procédé selon l'une des revendications 1 à 4, dans lequel les informations sur la QoS estimée sont reçues par le biais d'un système de communication de véhicule.

6. Programme d'ordinateur comportant un code de programme pour l'exécution d'un procédé selon l'une quelconque des revendications 1 à 5, lorsque le programme d'ordinateur est exécuté sur un ordinateur, un processeur, ou un composant matériel programmable.

7. Dispositif de communication sans fil (100) comprenant :

au moins une interface (12) pour communiquer avec une station de base sans fil et une station relais de véhicule ; et
un ou plusieurs processeurs (14), configurés pour exécuter le procédé selon l'une quelconque des revendications 1 à 5.

COMMUNICATING VIA A FIRST WIRELESS CONNECTION ⌐~110

DETERMINING WHETHER A DESIRED QOS EXCEEDS A QOS OF THE FIRST WIRELESS CONNECTION ⌐~120

ESTABLISHING A SECOND WIRELESS CONNECTION ⌐~140

## FIG. 1a

COMMUNICATING VIA A FIRST WIRELESS CONNECTION ⌐~110

DETERMINING WHETHER A DESIRED QOS EXCEEDS A QOS OF THE FIRST WIRELESS CONNECTION ⌐~120

RECEIVING INFORMATION ON MOBILE NETWORK OPERATOR ⌐~130

RECEIVING INFORMATION ON ESTIMATED QOS ⌐~135

ESTABLISHING A SECOND WIRELESS CONNECTION ⌐~140

TRANSMITTING A REQUEST ⌐~142

ESTABLISHING A CONNECTION TO A MOBILE COMMUNICATION SYSTEM OF A MOBILE NETWORK OPERATOR ⌐~144

ESTABLISHING A DATA CONNECTION ⌐~150

## FIG. 1b

FIG. 1c

FIG. 2a

FIG. 2b

FIG. 3

**REFERENCES CITED IN THE DESCRIPTION**

**Patent documents cited in the description**

- JP 2005143122 A
- US 20110294500 A1
- US 20100234071 A1
- US 20200280827 A1
- US 20190281526 A1